# EUROPEAN PATENT APPLICATION

(11) **EP 2 075 488 A1**
(43) Date of publication of application: **01.07.2009**
(21) Application number: 07816465.4
(22) Date of filing: 29.09.2007
(51) Int. Cl.: F16H 25/22

(54) **A SELFADAPTING SCREW TRANSMISSION MECHANISM WITH VARIABLE LEAD**

(30) Priority: 19.10.2006 CN 200610096827
(71) Applicant: Nanjing Kangni New Technology of Mechantronic Co., Ltd., Nanjing, Jiangsu 210-0038 (CN)
(72) Inventor: GU, Yu, Jiangsu 210038 (CN); SHI, Xiang, Jiangsu 210038 (CN)
(74) Representative: Altenburg, Bernardus Stephanus Franciscus
(86) International application number: PCT/CN2007/002851
(87) International publication number: WO 2008/046294

(57) **Abstract**

A selfadapting screw transmission mechanism with variable lead comprises a screw (1) with variable lead and a nut (2). Said nut is composed of a sliding sleeve (4) and a pin (3). The pin protrudes from the inside surface of the sleeve. With the aid of variable lead, the selfadapting nut can perform a combination of many type of motion, such as speed changing transmission, non-selflocking transmission and selflocking transmission. It has a simple structure and can be manufactured easily. (Fig. 1)

## Description

### Field of the Invention

The present invention relates to a crew transmission mechanism, in particular to a screw transmission mechanism with variable lead.

### Background of the Invention

The simplest screw mechanism comprises a nut, a screw, and a frame. For the various constant pitch screw transmissions that are widely used, since the lead H is constant, the translational movement and the rotary movement (i.e., displacement S and rotation angle θ) are in linear relationship. Apparently, the constant pitch screw movement can't meet the requirement for displacement S to change according to a specific curve rule. Using a screw with variable lead, it is simple and reliable to change the transmission curve. Screw mechanisms with variable lead can replace complex combined mechanisms to achieve required movement patterns, and are characterized by a shorter transmission chain, a higher transmission efficiency and a higher transmission accuracy. Screw transmission with variable lead can meet the demand for producing variable-speed turning movement from linear movement. However, in order to achieve a screw transmission mechanism with variable lead, a screw with variable lead and its matching nut are required. Though it is completely feasible to produce a screw with variable lead with modern numerical control processing techniques, conventional constant lead nuts can't screw with the screw with variable lead to accomplish self-adapting screw transmissions with variable lead. Therefore, to produce a screw mechanism with variable lead, the technical defect shortcoming of constant nut lead must be overcome.

### Summary of the Invention

The object of the present invention is to overcome the drawback in of the prior art and provide a self-adapting screw mechanism with variable lead that has simple structure.

The technical scheme of the present invention is: a self-adapting screw mechanism with variable lead comprises a screw and a nut, wherein the screw is a screw with variable lead, the nut comprises a sliding sleeve and a pin; the pin protrudes from the inner surface of the sliding sleeve and has a smaller width than the screw groove of the screw.

The sliding sleeve is a ring having an inner diameter that matches the outer diameter of the screw, and can rotate and slide along the screw; the ring can be a closed ring or an open ring.

The sliding sleeve is connected to the pin through rigid connection or rotatable connection. When used, the pin slides or rolls in the screw groove.

For a further improvement of the utility model, a bearing can be arranged on said sliding sleeve, and the upper end of said pin is arranged in the bearing, so as to implement a rotatable connection between the pin and the sliding sleeve.

The screw groove of the screw with variable lead has a rectangular or trapezoidal cross section.

The number of screw grooves of the screw with variable lead can be one or several; correspondingly the number of pin can be one or several.

In the present invention, the pin protruding from the inner surface of the sliding sleeve couples with the screw groove of the screw and contacts with the screw groove through point contact; the pin guides the sliding sleeve in the screw groove to move along the track of the screw groove, so that the nut is self-adapted to the variable lead of the screw. Depending on the configuration of the lead of the screw, the screw transmission mechanism with variable lead of the present invention can implement variable speed transmission, non-self-lock transmission, self-lock transmission and combinations of different movements. In the self-adapting screw transmission mechanism with variable lead of the present invention, the line contact between screw and nut in the prior art is changed to point contact, so that the nut is adapted to the variable lead of the screw. The self-adapting screw transmission mechanism with variable lead has a simple structure, and can be applied in any screw transmission environment, thus has broad application field.

### Brief Description of the Drawings

- Fig. 1: is a structure schematic diagram of the screw tranmission mechanism with variable lead in the present invention.
- Fig. 2: is a B-B sectional view of Fig. 1
- Fig. 3: illustrates the mathematical model of screw transmission with variable lead in the present invention
- Fig. 4: is another structure schematic diagram of the screw transmission with variable lead in the present invention
- Fig. 5: is a A-A sectional view of Fig. 4.

### Detailed Description of the Embodiments

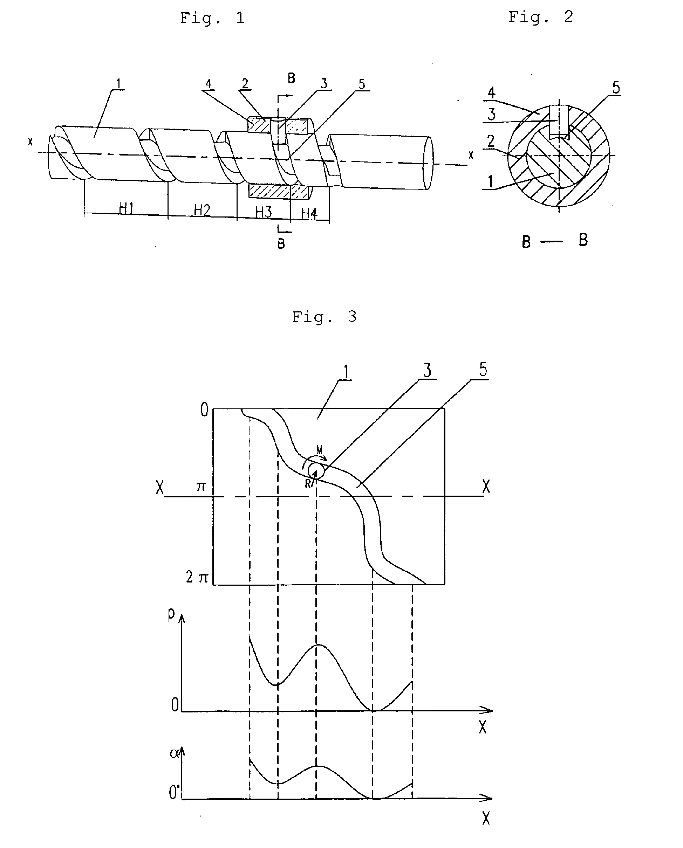

As shown in Fig. 1, the self-adapting screw transmission mechanism with variable lead comprises a screw with variable lead (1) and a nut (2), wherein, the screw (1) is a screw with variable lead, with lead H1, lead H2, lead H3, and lead H4 arranged on it; the screw groove (5) of the screw (1) is rectangular. The nut (2) comprises a sliding sleeve (4) and a pin (3), wherein the pin (3) protrudes from the inner surface of the sliding sleeve (4). The width of pin (3) is smaller than the diameter of the screw groove (5) of the screw (1). The nut (2) is screwed with the screw with variable lead (1) to form a screw pair. In the self-adapting screw transmission mechanism with variable lead, the pin (3) relatively moves in the screw groove (5) of the screw with variable lead (1) to form a screw pair, and thereby implements transmission between power and movement. The pin (3) is connected to the sliding sleeve (4) through rigid connection, and the screw pair is in sliding friction.

As shown in Fig. 1, it is clear that the lead of the screw is variable. The pin (3) couples with the screw groove (5) of the screw, and guides the sliding sleeve in the screw groove (5) to move along the track of the screw groove, so that the nut is self-adapted to the variable lead of the screw. In the big lead segments H1 and H2, the axial movement speed is higher; in the small lead segment H3, the axial movement is lower; if the lead of the small lead segment H4 is small enough (the pitch angle is less than the friction angle), the screw pair can be self-locked. That is to say, through the same screw pair transmission, variable-speed transmission, non-self-lock transmission, self-lock transmission, and their combinations can be implemented.

Fig. 2 is a B-B sectional view of Fig. 1. It is more clearly shown that the nut (2) comprises a pin (3) and a sliding sleeve (4), wherein, the pin (3) protrudes from the inner surface of the sliding sleeve (4) and is embedded in the screw groove (5). The screw groove (5) is rectangular.

The mathematical model of the screw transmission with variable lead is shown in Fig. 3, i.e., the screw with variable lead is expanded to a two-dimensional plane along its circumference. In the two-dimensional plane, the screw groove of the screw with variable lead contacts with the pin through point contact (line contact); if the screw with variable lead (1) is the driving part, the pin will bear a driving moment M and the resulting force R; therefore, the driving force applied on the screw pair transfers power and movement through the contact point (line). As long as the width of the screw groove (5) of the screw with variable lead is not smaller than the diameter of the pin (3), the nut (2) can work with any screw with variable lead (1) to form a screw pair and thereby accomplish screw transmission with variable lead. With reference to Fig. 3, it can be seen: for screw transmission with variable lead, the lead P of the screw varies along the axial line X-X of the screw; likewise, the pitch angle α of the screw varies along the axial line X-X of the screw.

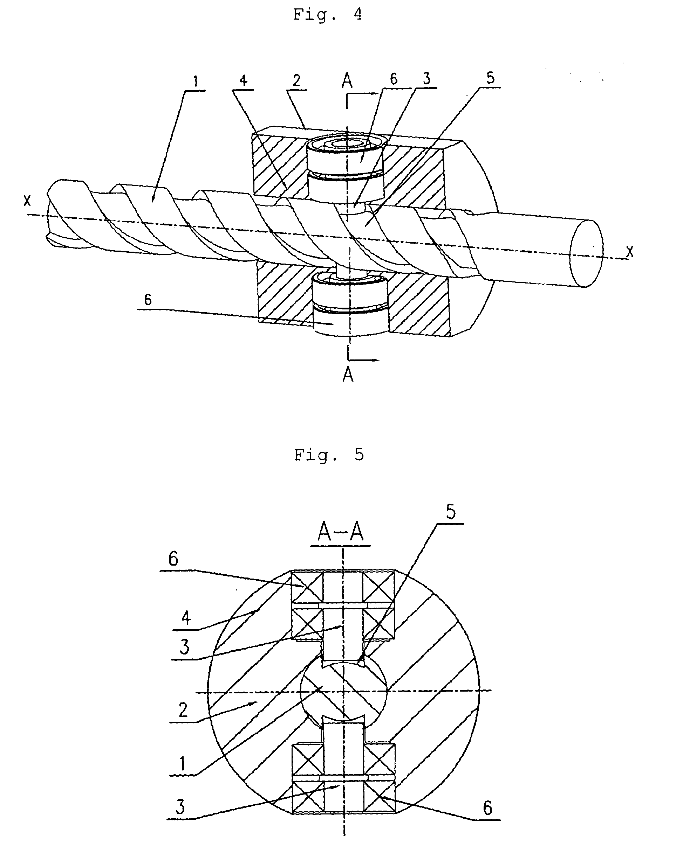

Fig. 4 shows another structure of the nut (2) of the present invention. As shown in Fig. 4, the nut (2) comprises pins (3) and a sliding sleeve (4). As shown in Fig. 4 and Fig. 5, the screw is double-end, bearings (6) are installed on the sliding sleeve (4), two pins (3) are mounted in the bearings (6) symmetrically and protrude from the inner surface of the sliding sleeve (4); the pins (3) are connected to the bearings (6) through rotatable connection, and the screw pair is in rolling friction.

## Claims

1. A self-adapting screw transmission mechanism with variable lead, comprises a screw and a nut, wherein the screw is a screw with variable lead, the nut comprises a sliding sleeve and a pin; the pin protrudes from the inner surface of the pin, the width of the pin is smaller than the width of the screw groove of the screw.

2. The self-adapting screw transmission mechanism with variable lead according to claim 1, wherein the number of screw groove of the screw with variable lead is one or several, accordingly the number of pin is one or several.

3. The self-adapting screw transmission mechanism with variable lead according to claim 1, wherein the screw groove of the screw with variable lead has a rectangular or trapezoidal cross section.

4. The self-adapting screw transmission mechanism with variable lead according to claim 1, wherein the sliding sleeve is connected to the pin through rigid connection.

5. The self-adapting screw transmission mechanism with variable lead according to claim 1, wherein the sliding sleeve is connected to the pin through rotatable connection.

6. The self-adapting screw transmission mechanism with variable lead according to claim 5, wherein a bearing is arranged on the sliding sleeve and the upper end of the pin is arranged in the bearing.
